# EUROPEAN PATENT APPLICATION

(11) **EP 3 379 653 A1**
(43) Date of publication of application: **26.09.2018**
(21) Application number: 17305317.4
(22) Date of filing: 21.03.2017
(51) Int. Cl.: H01R 11/14, H02G 1/02, H01R 43/00

(54) **CONTACT HEAD FOR SHORT CIRCUITING A CATENARY AND METHOD OF USE**

(71) Applicant: Dubuis et Cie, 41000 Villebarrou (FR)
(72) Inventor: VERVIER, Patrick, 41000 VILLEBAROU (FR); CERFEUILLET, Vincent, 41000 VILLEBAROU (FR)
(74) Representative: SBD IPAdmin

(57) **Abstract**

Contact Head (100, 200) for short circuiting a catenary (102, 202) and method of use. The contact head (100, 200) comprising: first and second mounting portions (104, 204) configured to extend in different directions over the catenary (102, 202) in use for suspending the contact head (100, 200) from the catenary (102, 202) and forming an electrical connection therewith; a drain (122, 222) configured to be electrically coupled to a cable (124, 224) for draining electrical current received by the contact head (100, 200) from the catenary (102, 202) away from the contact head (100, 200); wherein the mounting portions (104, 204) define parts of a passage (128, 228) through which the catenary (102, 202) extends in use, another part of the passage (128, 228) being defined by a blocking portion (130, 230) of the contact head (100, 200) which is configured to block upwards movement of the contact head (100, 200) relative to the catenary (102, 202) and thereby restrict the contact head (100, 200) from being caused to fall from the catenary (102, 202) by electromagnetic forces in use.Fig. 3

## Description

### Field

This specification relates to contact heads for short circuiting an elongate electrical conductor, specifically a catenary, and method of use thereof.

### Background

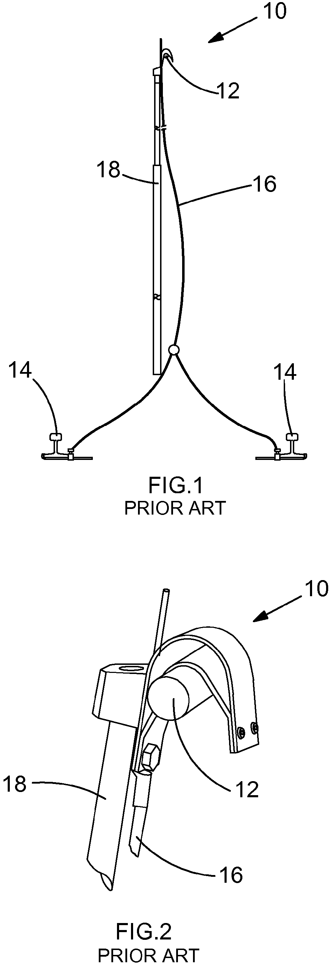

EP0810691B1 teaches a contact head for short circuiting a catenary that supplies electrical current to trains. During maintenance of the catenary it is important to short circuit the catenary by electrically coupling it to ground. This is illustrated in Fig. 1 in which a contact head 10 hangs from a catenary 12 and electrically couples it to rail tracks 14 in contact with the ground via a wire arrangement 16. The pole 18 is used to lift the contact head 10 up into contact with the catenary 12. A close up of the contact head 10 hanging from the catenary 12 is illustrated in Fig. 2, wherein electrically conductive components of the contact head 10 electrically couple the catenary 12 to the wire arrangement 16. In high current situations electromagnetic forces gendered by current flow can force the contact head 10 out of hanging engagement with the catenary 12 causing it to fall.

Aspects of the present invention are conceived to address the above.

### Summary

According to an aspect of the present invention there is provided a contact head for short circuiting a catenary, the contact head comprising: first and second mounting portions configured to extend in different directions over the catenary in use for suspending the contact head from the catenary and forming an electrical connection therewith; a drain configured to be electrically coupled to a cable for draining electrical current received by the contact head from the catenary away from the contact head; wherein the mounting portions define parts of a passage through which the catenary extends in use, another part of the passage being defined by a blocking portion of the contact head which is configured to block upwards movement of the contact head relative to the catenary and thereby restrict the contact head from being caused to fall from the catenary by electromagnetic forces in use.

The contact head may be configured such that when viewed from underneath in use respective portions of the catenary from which the mounting portions hang are visible.

The first and second mounting portions may extend from different parts of a body of the contact head.

The first and second mounting portions may be on opposite sides of the body and axially displaced relative to each other along an axis extending through the passage.

The body may be substantially s-shaped as viewed from underneath in use and the first and second mounting portions may extend from locations adjacent respective ends thereof.

The body may define at least part of the blocking portion.

The first and second mounting portions may be substantially arcuate in shape.

The first and second mounting portions may be each flexible and deformable and supported by respective supporting fingers.

The first mounting portion, the second mounting portion and the blocking portion may be contiguous and comprise respective parts of a spiral member.

The contact head may further comprise a pole receiving portion for cooperating with a pole to enable the contact head to be lifted towards a catenary to be short circuited.

According to another aspect of the present invention there is provided a method comprising the steps of: providing a contact head for short circuiting a catenary, the contact head comprising first and second mounting portions configured to extend in different directions over a catenary in use for suspending the contact head from the catenary and forming an electrical connection therewith; positioning the contact head relative to the catenary such that the catenary is located between the first and second mounting portions and above a blocking portion of the contact head, the mounting portions and blocking portion defining parts of a passage; rotating the contact head relative to the catenary such that the mounting portions extend over the catenary from different sides, thereby providing that the catenary extends through the passage; and lowering the contact head such that the mounting portions engage the catenary for suspending the contact head from the catenary.

### Brief Description of the Drawings

Embodiments will now be described by way of non-limiting example with reference to the accompanying drawings, in which:
Fig. 1 illustrates a prior art arrangement for short circuiting a catenary;
Fig 2 illustrates the contact head of the prior art arrangement in Fig. 1;
Fig. 3 illustrates a contact head according to a first embodiment in use;
Figs 4a to 4d illustrate the steps involved in mounting the contact head in Fig. 3 to a catenary;
Figs 5a to 5d illustrate the steps involved in mounting the contact head in Fig. 3 to a catenary having a different thickness;
Fig. 6 illustrates the contact head in Fig. 3 from a different angle;
Fig. 7 illustrates the contact head in Figs. 3 and 6 from underneath;
Fig. 8 illustrates a contact head according to another embodiment; and
Figs 9a to 9d illustrate the steps involved in mounting the contact head in Fig. 8 to a catenary.

### Detailed Description

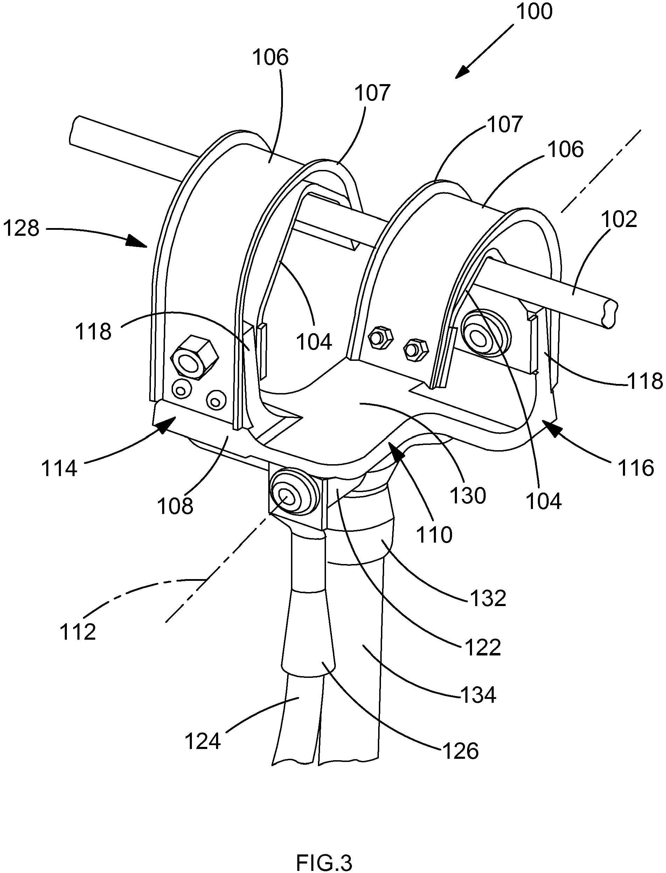

Fig. 3 illustrates a contact head 100 according to a first embodiment for short circuiting a catenary 102. First and second mounting portions 104 are configured to extend in different directions over the catenary 102 in use for suspending the contact head 100 from the catenary 102 and forming an electrical connection therewith. The mounting portions 104 are each flexible and deformable metallic members and are supported by respective rigid supporting fingers 106 coupled to the body 108 similarly as described in EP0810691B1.

The body 108 has a first body section 110 with a dimension along the axis denoted 112 in Fig. 3. Adjacent one end of the first body section 110 the body has a second body section 114 with a dimension perpendicular to the axis 112, whereas adjacent the other end of the first body section 110 the body has a third body section 116 also with a dimension perpendicular to the axis 112 but extending in the opposite direction to the second body section 114. The body 110 is thus substantially s-shaped.

An upwardly extending flange 118 is provided on each of the second and third body sections 114, 116. A supporting finger 106 is coupled to the outer surface of each respective flange 118, for instance by a nut and bolt type fixing mechanism. The supporting fingers 106 both extend upwards away from the body 108 and both have a curved section defining a substantially hook like shape that curves back down in the direction of the body 108. The respective supporting fingers 106 curve in opposite directions such that in use they both extend over different parts of a catenary 102. Looking at Fig. 3 one supporting finger 106 extends from a right-side to a left-side of a catenary 102 in use, whereas the other supporting finger 106 extends from the left-side to the right-side of the catenary 102 in use. It is further mentioned that the supporting fingers 106 have ridges 107 on either side thereof for strengthening the supporting fingers 106.

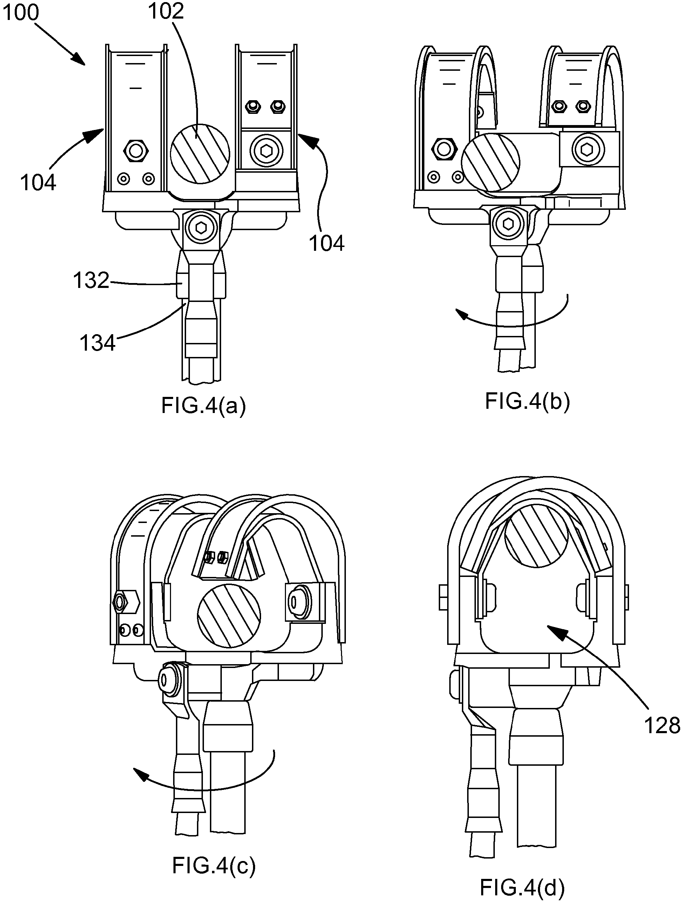

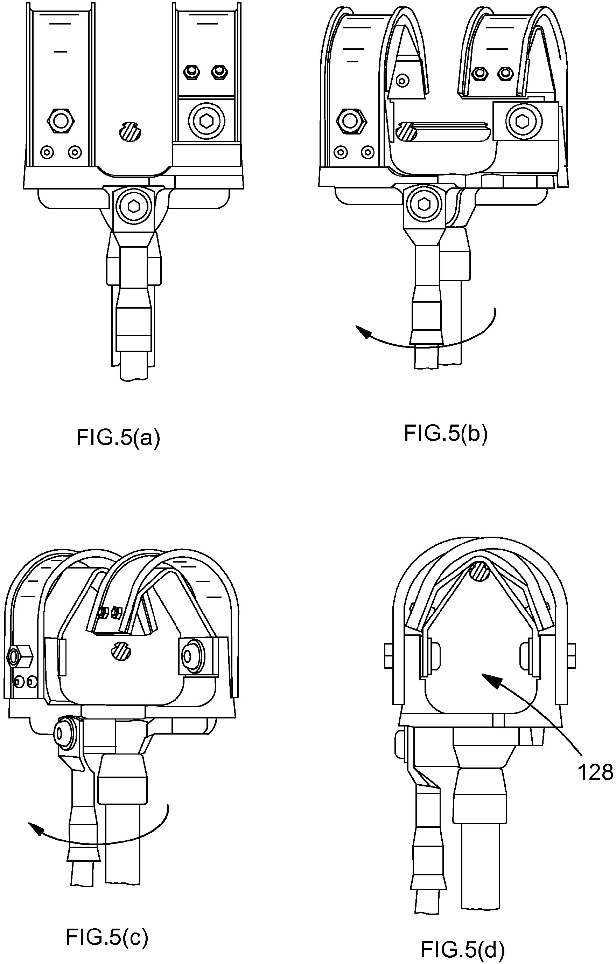

The above mentioned flexible and deformable mounting portions 104 are fixed at one end to an inner side of a respective flange 118 and are fixed at the other end to a distal end of a respective rigid supporting finger 106 by nut and bolt type fixing mechanisms for instance and are configured similarly to the conductors described in EP0810691 B1. Specifically the mounting portions 104 are shorter than the supporting fingers 106, considered when flattened and measured between the locations at which such components are fixed together and to a respective flange 118. This enables the contact head 100 to hang from, and form an electrical connection with, catenary wires of different thicknesses and varieties as described in EP0810691 B1. For instance Fig. 4d herein illustrates the contact head 100 hanging from a catenary 102 having a first thickness, whereas Fig. 5d herein illustrates the contact head 100 hanging from a catenary 102 having a second different thickness.

A drain 122 forming part of the body 108 is configured to be electrically coupled to a cable 124 for draining electrical current received by the contact head 100 from the catenary 102 away from the contact head 100. In the embodiment illustrated in Fig. 3 a metallic lug 126 electrically couples the drain 122 and a cable 124 for enabling this, although it will be appreciated that a direct electrical connection between the drain 122 and cable 124 could be used to achieve the same effect.

The mounting portions 104 each define part of a passage 128 through which a catenary 102 extends in use, another part of the passage 128 being defined by a blocking portion 130 which is configured to block upwards movement of the contact head 100 relative to the catenary 102 and thereby restrict the contact head 100 from being caused to fall from the catenary 102 by electromagnetic forces. The passage 128 is better illustrated in Figs. 4d and 5d, which show the passage 128 as viewed along its length in use.

When the contact head 100 is short circuiting a catenary 102 the contact head 100 forms an electrical connection with the catenary 102 such that electrical current drains through the contact head 100 to the cable 124 which can be coupled to ground or another location to which electrical current is to be drained. In normal use, an electrical connection is present between the catenary 102 and the mounting portions 104 which extend over the catenary 102. However, if the electrical current flowing through the catenary 102 suddenly increases, e.g. due to a lightning strike or power supply malfunction, electromagnetic forces generated by current flow could force the contact head 100 upwards if the component of electromagnetic force generated in the upwards direction is strong enough to overcome the gravitational forces acting on the contact head 100 and components coupled thereto. In such a situation the blocking portion 130 defined by a surface of the body 108 is caught on the catenary 102 for restricting movement of the contact head 100 away from the catenary 102. When current flow eventually lessens, resulting in the contact head 100 moving back down under gravity, the mounting portions 104 re-engage the catenary 102 so the contact head 100 remains in hanging engagement therewith.

Looking again at Figs. 4d and 5d, the passage 128 surrounds the catenary 102 in use so no matter what direction the contact head 100 is forced in relative to the catenary 102 by electromagnetic forces or otherwise, some part of the contact head 100 will engage the catenary 102 and resist movement of the contact head 100 away from the catenary 102. This reduces the likelihood of the contact head 100 being ejected from hanging engagement with the catenary 102 by electromagnetic forces or otherwise by accident.

How the contact head 100 heretofore described is mounted to a catenary 102 will now be described with reference to Figs 4a to 4d.

The contact head 100 has a pole receiving portion 132 for cooperating with a pole 134 to enable a person to lift the contact head 100 upwards towards a catenary 102 raised above ground level. Manipulating the pole 134 a user positions the contact head 100 relative to the catenary 102 to be short circuited such that the catenary 102 is located between the first and second mounting portions 104 as illustrated in Fig. 4a. The contact head 100 is then rotated relative to the catenary 100 such that the mounting portions 104 extend over the catenary 102 from different sides as illustrated in Figs. 4b and 4c. Moreover the contact head 100 is rotated until an axis extending through the passage 128 is substantially parallel with the catenary 102. The contact head 100 is then lowered such that the mounting portions 104 engage the catenary 102 for suspending the contact head 100 from the catenary 102. When the user lets go of the pole 134 the contact head 100 will hang from the catenary 102. It will be appreciated that the cable 124 can be electrically coupled to ground or otherwise whenever is convenient, for example before or after the preceding steps.

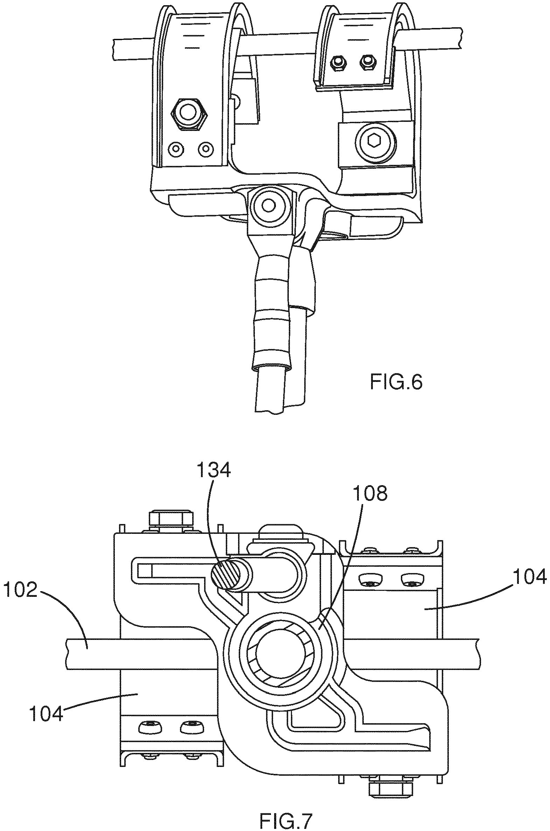

When the contact head 100 is viewed from underneath after being hung from a catenary 102 respective portions of the catenary 102 from which the mounting portions 104 hang are visible. This is apparent from inspecting Fig. 7. A user can thus easily inspect from ground level whether the contact head 100 has been mounted correctly to a catenary 102.

Persons skilled in the art having read the foregoing will be able to identify suitable materials for forming the respective components of the first embodiment described above. Nevertheless it is here mentioned that the body 108 could be formed of aluminium, the supporting fingers 106 could be formed of steel and the mounting portions 104 could comprise a copper tin plated braded material.

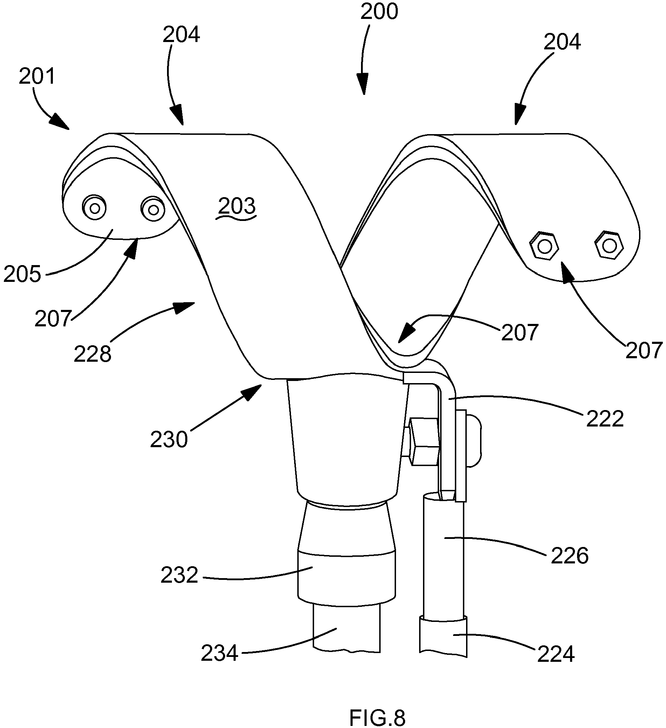

Another embodiment is now described with reference to Fig. 8 in which all features similar to the preceding embodiment are denoted with like reference numerals increased by 100.

A contact head 200 for short circuiting a catenary has a spiral member 201, wherein the spiral member 201 comprises a metallic outer section 203 and a metallic inner section 205. The metal forming the metallic outer section 203 is chosen for its strength properties (e.g. steel) which needs to be capable of supporting the weight of the contact head 200 and components coupled thereto in use. The metallic inner section 205 is formed of similar material to the flexible and deformable mounting portions 104 described in connection with the preceding embodiment; that is they could be formed of a copper tin plated braded material.

The metallic inner section 205 is fixed at various locations to the metallic outer section 203 by fixing mechanisms 207 (e.g. nut and bolt fixing mechanisms). Fig. 8 only shows two such fixing locations, whereas the third is obscured from view by the metallic outer section 201. In more detail the metallic inner section 205 is shorter than the metallic outer section 203, considered when flattened and measured between the locations at which such components are fixed together. This enables the contact head 200 to hang from, and form an electrical connection with, catenary wires of different thicknesses and varieties as described in EP0810691 B1.

The spiral member 201 has three twists along its length. The leftmost and rightmost twists define first and second mounting portions 204 that are configured to extend in different directions over a catenary in use for suspending the contact head 200 from the catenary and forming an electrical connection therewith. The innermost twist defines a blocking portion 230 for restricting substantially upwards movement of the contract head 200 relative to a catenary. The first mounting portion 204, the second mounting portion 204 and the blocking portion 230 are thus contiguous.

A drain 222 in electrical connection with the spiral member 201 is configured to be electrically coupled to a cable 224 for draining electrical current received by the contact head 200 from a catenary away from the contact head 200. In the embodiment illustrated in Fig. 8 a metallic lug 226 electrically couples the drain 222 and a cable 224 for enabling this but it will be appreciated that a direct electrical connection between the drain 222 and cable 224 could achieve the same effect.

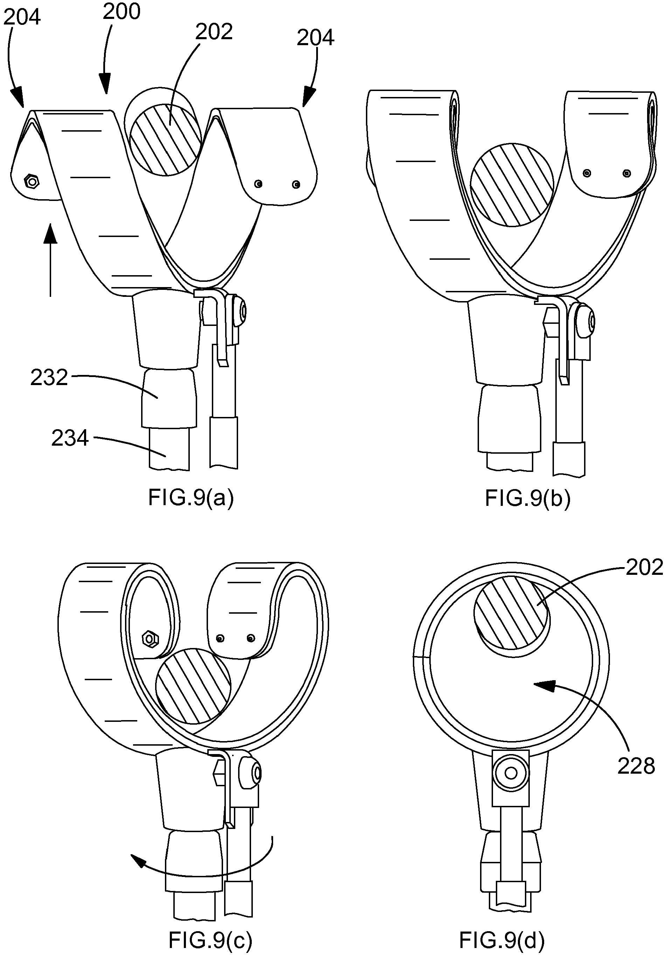

The mounting portions 204 and blocking portion 230 defined by the aforementioned twists define a passage 128 through which a catenary 202 extends in use which is best illustrated in Fig. 9d showing the passage 228 as viewed along its length in use. It is here mentioned that that the drawings of the second embodiment are highly schematic and in reality the metallic inner section 205 of the spiral member 201 does not lie flush against the metallic outer section 203 along its entire length but is secured thereto by fixing mechanisms 207 as heretofore described and stretches around a catenary 202 in use to form an electrical connection therewith (in a similar manner to how the mounting portions 104 in Fig. 3 which are secured at either end stretch over and around a catenary).

When the contact head 200 is short circuiting a catenary 202 the contact head 200 forms an electrical connection with the catenary 202 such that electrical current drains through the cable 224 to ground or another location to which electrical current is to be drained. In normal use the mounting portions 204 extending over the catenary 202 achieve an electrical connection therewith. However, if the electrical current flowing through the catenary 202 suddenly increases, e.g. due to a lightning strike or power supply malfunction, electromagnetic forces generated by current flow could force the contact head 200 upwards if the component of electromagnetic force generated in the upwards direction is strong enough to overcome the gravitational forces acting on the contact head 200 and components coupled thereto. In such a situation the blocking portion 230 is caught on the catenary 202 thereby restricting the contact head 200 from moving away from the catenary 202. When current flow eventually lessens, resulting in the contact head 200 moving back down under gravity, the mounting portions 204 re-engage the catenary 202 such that the contact head 200 remains in hanging engagement therewith.

Looking again at Fig. 9d, the passage 228 surrounds the catenary 202 in use so no matter what direction the contact head 200 is forced in by electromagnetic forces or otherwise some part of the contact head 200 will engage the catenary 202 and resist movement of the contact head 200 away from the catenary 202. This reduces the likelihood of the contact head 200 being ejected from hanging engagement with the catenary 202 by electromagnetic forces or otherwise by accident.

How the contact head 200 heretofore described is mounted to a catenary 202 will now be described with reference to Figs 9a to 9d.

The contact head 200 has a pole receiving portion 232 for cooperating with a pole 234 to enable a person to lift the contact head 200 upwards towards a catenary 202 raised above ground level. Manipulating the pole 234 a user positions the contact head 200 relative to the catenary 202 to be short circuited such that the catenary 202 is located between the first and second mounting portions 204 as illustrated in Figs. 9a and 9b. The contact head 200 is then rotated relative to the catenary 200 such that the mounting portions 204 extend over the catenary 202 from different sides as illustrated in Figs. 9c. Moreover the contact head 200 is rotated until an axis extending through the passage 228 is substantially parallel with the catenary 202. The contact head 200 is then lowered such that the mounting portions 204 engage the catenary 202 for suspending the contact head 200 from the catenary 202. When the user lets go of the pole 234 the contact head 200 will hang from the catenary 202. It will be appreciated that the cable 224 can be electrically coupled to ground or otherwise whenever is convenient, for example before or after the preceding steps.

When the contact head 200 is viewed from underneath after being hung from a catenary 202 respective portions of the catenary 202 from which the mounting portions 204 hang are visible. A user can thus easily inspect from ground level whether the contact head 200 has been mounted correctly to a catenary 202.

Persons skilled in the art having read the foregoing will be able to identify suitable materials for forming the respective components of the second embodiment described above. Nevertheless it is here mentioned that in addition to those features for which specific examples of suitable materials have already been given, the drain 222 could be formed of aluminium and welded to the metallic outer section 203 of the spiral member 201.

It will be appreciated that whilst various aspects and embodiments have heretofore been described, the scope of the present invention is not limited thereto and instead extends to encompass all arrangements, and modifications and alterations thereto, which fall within the spirit and scope of the appended claims.

For example the supporting fingers 106 need not necessarily be arched/curved in shape, provided that they are capable of extending across a catenary in use.

Also although the foregoing has been described in the context of short circuiting a catenary, it will be appreciated that embodiments can be used to short circuit other elongate electrical conductors which need not necessarily be a catenary.

## Claims

1. Contact head for short circuiting a catenary, the contact head comprising:
first and second mounting portions configured to extend in different directions over the catenary in use for suspending the contact head from the catenary and forming an electrical connection therewith;
a drain configured to be electrically coupled to a cable for draining electrical current received by the contact head from the catenary away from the contact head;
wherein the mounting portions define parts of a passage through which the catenary extends in use, another part of the passage being defined by a blocking portion of the contact head which is configured to block upwards movement of the contact head relative to the catenary and thereby restrict the contact head from being caused to fall from the catenary by electromagnetic forces in use.

2. The contact head of claim 1, wherein the contact head is configured such that when viewed from underneath in use respective portions of the catenary from which the mounting portions hang are visible.

3. The contact head of claim 1 or 2, wherein the first and second mounting portions extend from different parts of a body of the contact head.

4. The contact head of claim 3, wherein the first and second mounting portions are on opposite sides of the body and are axially displaced relative to each other along an axis extending through the passage.

5. The contact head of claim 3, wherein the body is substantially s-shaped as viewed from underneath in use and the first and second mounting portions extend from locations adjacent respective ends thereof.

6. The contact head of any of claims 3 to 5, wherein the body defines at least part of the blocking portion.

7. The contact head of any preceding claim, wherein the first and second mounting portions are substantially arcuate in shape.

8. The contact head of any preceding claim, wherein the first and second mounting portions are each flexible and deformable and are supported by respective supporting fingers.

9. The contact head of claim 1, wherein the first mounting portion, the second mounting portion and the blocking portion are contiguous and comprise respective parts of a spiral member.

10. The contact head of any preceding claim, further comprising a pole receiving portion for cooperating with a pole to enable the contact head to be lifted towards a catenary to be short circuited.

11. A method comprising the steps of:
providing a contact head for short circuiting a catenary, the contact head comprising first and second mounting portions configured to extend in different directions over a catenary in use for suspending the contact head from the catenary and forming an electrical connection therewith;
positioning the contact head relative to the catenary such that the catenary is located between the first and second mounting portions and above a blocking portion of the contact head, the mounting portions and blocking portion defining parts of a passage;
rotating the contact head relative to the catenary such that the mounting portions extend over the catenary from different sides, thereby providing that the catenary extends through the passage; and
lowering the contact head such that the mounting portions engage the catenary for suspending the contact head from the catenary.
